# EUROPEAN PATENT APPLICATION

(11) **EP 4 089 124 A1**
(43) Date of publication of application: **16.11.2022**
(21) Application number: 21382440.2
(22) Date of filing: 12.05.2021
(51) Int. Cl.: C08F 222/32, C09J 4/06, C09J 7/10, C09J 11/06, C09J 11/08, F16L 47/00, F16L 47/02, B29C 65/52, C08J 5/12

(54) **METHOD FOR BONDING A THERMOPLASTIC PIPING SYSTEM WITHOUT THE USE OF SOLVENT-BASED ADHESIVES, AND ASSOCIATED ADHESIVE WITHOUT THE USE OF SOLVENTS**

(71) Applicant: Unecol Adhesive Ideas, S.L., 46440 Almussafes (Valencia) (ES)
(72) Inventor: CEREZO JIMENEZ, Jose, Ramon, 46440 ALMUSSAFES (Valencia) (ES); SANTAMARIA PEDRON, Sara, 46440 ALMUSSAFES (Valencia) (ES); RODRIGUEZ FERNANDEZ, Denis, 46440 ALMUSSAFES (Valencia) (ES); JIMENEZ LOPEZ, Juan, Jose, 46440 ALMUSSAFES (Valencia) (ES)
(74) Representative: Herrero & Asociados, S.L.

(57) **Abstract**

Method for bonding a thermoplastic piping system (1) without the use of solvent-based adhesives, the piping system (1) comprising at least one first pipe or fitting part (11), and at least one second pipe or fitting part (12), which comprises the steps of i) applying a cyanoacrylate adhesive (2) onto at least one surface of the at least one first pipe or fitting part (11), or at least one second pipe or fitting part (12), ii) inserting together the at least one first pipe or fitting part (11), and the at least one second pipe or fitting part (12) before an open time lapses, iii) removing the excess of cyanoacrylate adhesive (2), iv) allowing the adhesive to cure. Associated adhesive for bonding a thermoplastic piping system (1) without the use of solvents, comprising a cyanoacrylate monomer (21), a polymerization inhibitor, a viscosity thickener, and a curing speed adjusting catalyst.

## Description

### OBJECT OF THE INVENTION

The purpose of this patent application is a method for bonding a thermoplastic piping system without the use of solvent-based adhesives, according to claims 1 to 5, and associated adhesive for bonding a thermoplastic piping system without the use of solvents, according to claims 6 to 20.

### APPLICATION SCOPE

Thermoplastic pipes and fittings are commonly used in construction, as part of piping systems. Said thermoplastic piping systems are widely use in industrial pressure systems, sewage, electrical conduits and also for drinking water installations. Such pipes are often based on, or made from unplasticized poly(vinyl chloride) (PVC-U), chlorinated poly(vinyl chloride) (PVC-C), acrylonitrile-butadiene-styrene (ABS) and styrene copolymer blends (PVC+SAN).

### BACKGROUND OF THE INVENTION

For bonding thermoplastic piping systems, a solvent containing adhesive is commonly used. Solvent based adhesives functions by welding pipes and fittings by softening the surface of the material being bonded. The polymer chains of the softened material intermingle to form a solvent-welded joint. Unlike gluing principle, solvents are responsible for the adhesion mechanism of the bond. The solvents diffuse into the thermoplastic material, swell it and produce the bonding of the substrates in the pressing operation. The solvents are desorbed over a certain time depending on their nature and a smoothly bond is achieved.

It is known from the state of the art, as per the document, CN102206474, solvent-based adhesives for a CPVC (Chlorinated Polyvinyl Chloride) material. The adhesive includes the following components in parts by weight: 15-28 parts of CPVC resin, 120-165 parts of low toxicity solvent and 0-15 parts of thickening resin. On the one hand, the adhesive disclosed by the invention has better properties of adhesion and heat resistance, lower cost of all components and stronger product competitiveness; on the other hand, because the low toxicity solvent is adopted, the adhesive disclosed by the invention can be used for bonding a water supply CPVC pipeline systems, does not influence the water quality after solidified, thereby being consistent with the trends of health and environment friendliness.

It is also known from the state of the art, as per the document, CN 1844286, lowtoxic solvent adhesives used in unplasticised polyvinyl chloride plastic duct system for adhesion. The adhesive of this invention consists of best matches of polychloroethylene basic resin, flexible polymer toughened, modified resin and lowtoxic mixed solvent, also can include auxiliary agents such as adhesion-promotion resin, anti-oxidant, thixotropic agent and bulk additive. Using the adhesive of this invention can make the adhesive site of the PVC-U pipe system possess good preliminary strength and final strength and have good sanitary performance.

Solvent adhesives mentioned are usually a solution of a thermoplastic resin in a suitable solvent mixture. For example, a PVC-U solvent adhesive is based on PVC-U resin dissolved in tetrahydrofuran, butanone, N-methyl-2-pyrrolidone, dimethyl sulfoxide, cyclohexanone and/or others. The use of hazardous and volatile substances as those mentioned before has major disadvantages due to health concerns.

Another problem presented by using solvent-based adhesives is the emission of volatile organic compounds (VOCs), as the result from solvents evaporating from the adhesive. VOCs are clearly identified to be harmful to the environment, and many regulations worldwide introduce restrictions or reductions on emissions of VOCs. A plastic pipe joining adhesive that emits no VOCs would be highly desirable. According to that, although thermoplastic piping systems adhesives based on solvent cements have very good results, there is a real need to develop alternative technologies safer with the environment, health, and safety of the users.

It is an objective of the present invention to find a good solution for the aforementioned needs, in particular not using organic solvents or using low concentrations, thus presenting a lower potential for danger than those used today.

On the other hand, the possibility of achieving an adhesive solution based on a onecomponent product is being sought, which would facilitate the application of the product by the installer, reducing the waste produced by the packaging used and making it attractive compared to the solutions currently available on the market. In this regard, it should be mentioned that the adhesives to be developed in the present invention are based on technologies that up to now have not been considered in the field of application of the installation of pipe systems in thermoplastic materials.

### DESCRIPTION OF THE INVENTION

The objective of the present invention is to provide adhesives for thermoplastic piping systems that do not contain solvents, as usual adhesives do, and have a bonding performance on plastic pipe materials, which are capable to bond PVC-U and other plastic pipes/thermoplastic piping systems, complying with the requirements on shear strength and pressure resistance established in applicable product standards like EN 14814 "Adhesives for thermoplastic piping systems for fluids under pressure. Specifications", ASTM D2564 "Standard Specification for Solvent Cements for Poly(Vinyl Chloride) (PVC) Plastic Piping Systems" and EN 14680 "Adhesives for non-pressure thermoplastic piping systems".

Some developments have been achieved for bonding plastic pipes using adhesives without solvent-based compositions. In a first alternative it has been considered a curable adhesive based on epoxy resin mixture and a blend of polyamide and polyamine as curing agent. In a second alternative it has been considered the use of (meth)acrylate adhesives to connect plastic pipes with or without fittings. Said (meth)acrylate adhesives comprising at least one polymerizable monomer component based on (meth)acrylate, a curing agent and a catalyst to increase polymerization speed.

The both previous proposed solutions focused to avoid the use of solvents are twocomponent reactive adhesives. Good performance of both technologies would be based on the correct mixing of the two components in terms of proportion and also the perfect homogenisation of the mixture, that can be difficult to achieve by the user. Commonly, these adhesives are presented in containers that incorporate a dispensing nozzle with a static mixer, that have to be replaced frequently as the adhesive cures inside the nozzle. These drawbacks make such adhesive solutions not easy to use and also consuming high amounts of packaging materials.

By further research and continuous experimentation on adjusting properties on adhesive formulations based on cyanoacrylate technology to performance requirements and bonding procedures on plastic piping systems, it has been developed an effective adhesive based on cyanoacrylate that surprisingly impart very good shear strength, pressure and temperature resistance when used to join thermoplastic piping systems.

The adhesive is designed to be flexible, with gap filling properties and with a cure speed suitable for making easy the bonding of pipes and fitting of different diameters. The formula of the adhesive is based on cyanoacrylate monomer, plasticiser, poly(vinyl chloride) / polymer resins, catalysts and stabilizers to modulate the curing speed. The adhesive is solvent free instead of the current traditional adhesive solutions based on organic solvents like tetrahydrofuran, cyclohexanone, butanone and other organic solvents.

Cyanoacrylate is the generic name of certain adhesives which are well known for their fast curing speed. Traditionally they are known as instant adhesives. Cyanoacrylate adhesives are used in many industrial and consumer/domestic applications as they polymerize very quick producing very strong bonds on almost every material. These adhesives are usually used as single-component and cure very rapidly when bonding materials are in close contact, forming a very thin film between two substrates.

In general, cyanoacrylate adhesives are considered to be brittle once cured. The addition of some materials, like rubbers, for example, can produce some flexibility on the bond, but also do affect the cure speed and mainly the stability of the formula inside the container. On the other hand, flexibility is not the same property as elasticity. For example, some materials like paper are flexible but not elastic. Elastic adhesives are needed when adhesive joints are submitted to fluctuations of temperature, like piping installations are. Plasticizers do produce the desired effect of elastic properties on cyanoacrylates.

More specifically, the method for bonding a thermoplastic piping system without the use of solvent-based adhesives of the present invention, the piping system comprising at least one first pipe or fitting part, and at least one second pipe or fitting part, comprises the steps of: i) applying a cyanoacrylate adhesive onto at least one surface of the at least one first pipe or fitting part, or at least one second pipe or fitting part; ii) inserting together the at least one first pipe or fitting part, and the at least one second pipe or fitting part before an open time lapses; iii) removing the excess of cyanoacrylate adhesive; iv) allowing the adhesive to cure. Cyanoacrylate adhesive has to be understood by an adhesive containing a cyanoacrylate monomer.

Said method presents several important advantages compared with usual plastic piping systems bonding based on solvent-based adhesives. Main improvement comes by using an adhesive based on cyanoacrylate technology that has no organic solvent in its composition. Therefore, the VOCs emissions produced by these methods are negligible, so piping system connections described do not use hazardous solvents and have no health and environmental concerns.

Furthermore, bonded joints produced have a very good hydrolysis and impact resistance and a very good performance at low and high temperatures. In particular, bonded joints obtained by this method produce very high shear strength results when tested either according to EN 9311-2 "Adhesives for thermoplastic piping systems - Part 2: Determination of shear strength" or ASTM D2564 (6.3 Bond strength) achieving required minimum values stated in EN 14814 "Adhesives for thermoplastic piping systems under pressure. Specifications", EN 14680 "Adhesives for non-pressure thermoplastic piping systems. Specifications" and ASTM D2564 (5.4 Lap shear strength) in a short time compared with usual solvent-based adhesives. That can reduce the time needed to put an installation into service.

Additionally, pressure resistance of the bonded pipe systems is obtained in a short time. Bonded joints fulfil the requirements about pressure resistance / hydrostatic burst strength required in EN 14814 and ASTM D2564 quicker than usual solvent-based adhesives used to bond plastic pipe systems.

On the other hand, open time on the method according to this invention is much longer than when solvent-based adhesives are employed. This difference makes it easier for installers to assure a perfect connection of pipe systems, more specifically in hot climate countries, where ambient temperature is high and open time for solvent-based adhesives is extremely short. The comparative long time also facilitates the correct bonding of large diameter pipes. The fixture time is reduced, and bonded pieces can be handled in less time than compared with usual solvent-based bonded joints, which makes the installation easier.

Among the advantages offered by cyanoacrylates we can cite that they are onecomponent, and easy-to-apply. They form strong adhesions quickly. Only very small amounts of adhesive are necessary. They form virtually invisible adhesions if excesses are avoided. Good chemical resistance to most solvents is obtained by the adhesive joints.

Furthermore, a specific improvement of the invention is that it makes possible bonding piping systems consisting in different plastic materials. For example, solvent-based adhesives for bonding ABS (acrylonitrile-butadiene-styrene copolymer) pipes should not be used to bond PVC-U (unplasticized polyvinylchloride) pipes or fittings. With the invention adhesive, ABS pipes can be bonded with PVC fittings or pipes, for example.

Additionally, the method for bonding a thermoplastic piping system without the use of solvent-based adhesives, comprises a previous step of applying a cleaner onto the at least one surface of the pipe and/or the fitting. Usual cleaners used together with solvent-based adhesives for thermoplastic piping systems are organic solvents that can dissolve or almost soften the surface of the thermoplastic pieces to be bond. In that way, the solvent-based adhesive can diffuse more easily on the plastic pieces and therefore the bond strength obtained is achieved. Most common organic solvents used are acetone, butanone, tetrahydrofuran, cyclohexanone and some acetates. In the present invention, the cleaner-has no need to soften the plastic surface, as the adhesion mechanism is based on the polymerization of the cyanoacrylate adhesive which is placed between the plastic pieces to be bond. Therefore, the cleaner composition that is described in this invention does not need to be composed by organic solvents and also water-based cleaners can be used.

According to another aspect of the invention, said cleaner presents, optionally, activation properties, becoming a cleaner-activator element. The further use of said cleaner-activator element in the method described gives the choice to reduce the fixture time when pieces to be bond are joined and/or after joining these, and also reduces the time needed to wait for handling the bonded plastic pieces.

What the present invention proposes, is to use the cleaner-activator element to clean and degrease the surface of the plastic pieces to be bond, as well to increase the polymerization speed of the cyanoacrylate adhesive. The cleaner-activator can be composed of active substances diluted using organic solvents or water-based formulations.

The use of activators together with cyanoacrylate adhesives is described in previous patents. Activators described therein are a dilute solution of an active substance, or a mixture of different substances applied beforehand onto a substrate, and/or applied on the cyanoacrylate adhesive before it has fully cured. They are based on low boiling organic solvents, so they evaporate rapidly, leaving the activator as an active substance on the substrate and/or on the adhesive.

Active substances commonly used in such activators, can be very toxic, so it is recommended to use a cleaner-activator based on active substances that have low toxicity.

According to another aspect of the invention, the cleaner is an organic solvent or solvent mixtures or water-based. In this way, the cleaner composition for this invention can be also water-based cleaner-activators, as an alternative to organic solvents and/or solvent mixtures.

Substances described in the states of the art for the use of cleaner-activator do have a very high toxicity, which is an important drawback. In present invention, the substances proposed are less toxic and for some substances used in the proposed concentrations make the cleaner-activator composition safe to use.

More specifically, the cleaner also includes active substances that promote polymerization of the cyanoacrylate adhesive, so that, as mentioned, the cleaner does not need to be composed by organic solvents and also water-based cleaner-activators can be used.

What the present invention proposes, is to use the cleaner-activator element to clean and degrease the surface of the plastic pieces to be bond, as well to increase the polymerization speed of the cyanoacrylate adhesive. The cleaner-activator can be composed of active substances diluted using organic solvents or water-based formulations.

Optionally, the cleaner, being preferably a cleaner-activator, is sprayed over the surface to be bonded, so the application time is reduced. So, in a particular embodiment the cleaner is a cleaner-activator.

According to another aspect of the invention, an adhesive for bonding a thermoplastic piping system without the use of solvents, comprises at least one cyanoacrylate monomer that polymerizes in the presence of an initiator, at least one anionic polymerization inhibitor, at least one radical polymerization inhibitor, at least one viscosity thickener and at least one curing speed adjusting catalyst. The inclusion of plasticizers and polymers and/or copolymers in the adhesive formula is also advisable.

Each one of the components of the formula has been introduced in order to achieve an adhesive composition that covers all the necessary requirements to carry out the joint of the piping systems with similar benefits to the current adhesives based on organic solvents. For example:
a) the cyanoacrylate monomer allows for a structural bond, ensuring that the bond strength is at least as strong as that of the bonded material itself. A cyanoacrylate monomer, or mixture of cyanoacrylate monomers, polymerizes in the presence of an initiator, which can be even water / moisture. The polymerization inhibitors manage to maintain the stability of the adhesive and modulate, or even reduce, the polymerization rate so that the joint between the plastic pieces can be made, and the pieces can be still oriented. In traditional cyanoacrylate formulas, the curing / polymerization rate is so high that it is not possible to make a joint using as much time as is necessary in plastic pipe joint. Moreover, the polymerization inhibitor, or a mixture of several polymerization inhibitors, assures a suitable stability of the adhesive formula.
b) the thickener allows to modify the viscosity, control the flowability and film thickness of the adhesive. The thickening effect can be achieved by fumed silica and/or other typical thickeners used for cyanoacrylates. Also, thickeners and thixotropic agents adjust the viscosity and thixotropy of the formula so that thick layers of adhesive can be produced that allow the application on cylindrical surfaces without the adhesive sagging, leaving areas with less adhesive.
c) the catalyst allows adjusting the cure speed and assures curing in worst ambient curing conditions (poor or absence of humidity, very low temperatures, etc). Catalysts are adjusted in terms of their nature and concentration so that once the joint is made, the polymerization occurs and the joints are strong enough to be able to continue with the installation of the pipe after a few minutes.
d) the plasticizer softens the cyanoacrylate polymer backbone produced by the polymerization of the cyanoacrylate monomer to make it elastic.
e) the polymers and or copolymers increases filling capacity, flexible behaviour and hydrolysis resistance.

The previous types of substances included in the adhesive composition, and the mentioned below, have been adjusted to meet the different needs of the correct application or functional requirements: shear strength of the joined pipe joints, pressure resistance of the joints, open and fixture time, etc...

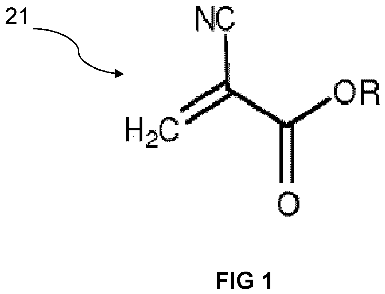

More particularly, the cyanoacrylate monomer of the adhesive of the present invention is any of the group of methyl-, ethyl-, butyl-, octyl-, methoxyethyl-cyanoacrylate, or mixtures thereof. Cyanoacrylate is the generic name of certain adhesives which are well known for their fast cure speed. Traditionally they are known as instant adhesives. These adhesives are based on esters of 2-cyanoacrilic acid. The structure of the monomer is as shown in Figure 1, where R is usually an alkyl group, such as, for example, methyl, ethyl, butyl or octyl, or an alkoxyalkyl group, for example, 2-methoxymethyl or 2-ethoxyethyl, which particularly contributes to their advantageous properties.

Cyanoacrylate adhesives are considered extremely reactive. For this reason, polymerization inhibitors, either anionic or radical, are frequently added to the adhesive composition. Preferably, the polymerization inhibitor of the adhesive of the present invention is an anionic inhibitor, which enhances the stability of the adhesive composition.

Optionally, said anionic inhibitor is any of the group of boron trifluoride etherate or boron trifluoride or methanesulfonic acid or sulfur dioxide or sulfur trioxide or methane sulfonic acid or para-toluene sulfonic acid, or mixtures thereof, which show a good performance in combination of the other elements of the adhesive composition.

More particularly, the polymerization inhibitor is a radical inhibitor, or a mixture of several radical polymerization inhibitors in order to assure a suitable stability of the adhesive formula.

In particular, the radical inhibitor of polymerization is any of the group of hydroquinone or hydroquinone, monomethyl ether or 4-methoxyphenol or butylhydroxytoluene (BHT) or butylhydroxyanisole, isomers (BHA), or mixtures thereof, which show good stability properties in combination of the other elements of the adhesive composition. Particularly desirable radical inhibitor is hydroquinone. According to a preferred embodiment of the adhesive of the invention, the viscosity thickener is any of the group of poly (methyl methacrylate), methacrylate copolymers, acrylic rubbers, cellulose derivatives, polyvinyl acetate, poly (a-cyanoacrylates), or mixtures thereof, which show good viscosity thickening properties in combination of the other elements of the adhesive composition. Particularly desirable viscosity thickener is poly (methyl methacrylate).

In addition, the adhesive for bonding a thermoplastic piping system without the use of solvents of the present invention, further comprises at least one polymer and or copolymer dissolved in the cyanoacrylate monomer, which increase the hydrolysis resistance, flexibility and the filling capacity of the adhesive.

More specifically, the polymer or copolymer is a copolymer of vinyl chloride, which is dissolved in the cyanoacrylate monomer interacting with it and making the monomer flexible when cured and stable in liquid form, and also increases the filling capacity of the adhesive necessary to make joints where diametrical gaps can reach 0.6 to 0.8 mm. On the other hand, they provide the necessary flexibility as indicated above and improve the resistance to hydrolysis of the joints made.

In a preferred embodiment of the invention, the adhesive further comprises at least one plasticizer compatible with the cyanoacrylate monomer. Said plasticizer produce the desired effect of enhancing the elastic properties on cyanoacrylates, modifying the brittle behaviour. Plasticizers modify the stiffness of cyanoacrylate adhesives so that the joint becomes resistant to dimensional changes due to the pressure of the joints, and to the elongation of the materials due to conduction through the interior of the pipeline, of fluids at different temperatures.

Optionally, the plasticizer is of acetate type like any of the group of triacetin, phthalates like dioctyl phthalate, trimellitate like trioctyl trimellitate, adipate like dimethyl adipate and benzoates like diethylene glycol dibenzoate, which show good elastic properties in combination of the other elements of the adhesive composition.

As the proposed adhesive is intended to be used for piping systems for the transport of drinking water, the selection of the plasticizer should consider the toxicological properties if the substance used. As the concentration of plasticizer to be used to produce an elastic bond using cyanoacrylates is considerable high compared with current commercial cyanoacrylate adhesives, also the effect of the plasticizer regarding stability of the formulated adhesive is critical, as such substances may affect adversely to premature polymerization of the liquid adhesive inside the packaging used as commercial presentation. Therefore, the triglyceride 1,2,3-triacetoxypropane, more generally known as triacetin is the preferred plasticizer for this inventive, as it has been approved as generally recognized as safe food additive without toxic effects in long term feeding tests. Regarding stability of the cyanoacrylate formulas including high concentration levels of triacetin, the research made demonstrates the good shelf life of the formulas produced.

According to another aspect of the invention, the curing speed adjusting catalyst is any of the group of a crown ether, or compounds of calixarene, or polyethylene glycols, or mixtures thereof, which show good curing speed properties in combination of the other elements of the adhesive composition. Particularly desirable catalyst is 18-crown-6.

Optionally, the adhesive further comprises a thixotropic agent, so that thixotropy of the formula is possible to be adjusted in such a way that thick layers of adhesive can be produced that allow the application on cylindrical surfaces without the adhesive sagging, leaving areas with less adhesive.

The adhesive may comprise at least one adhesion promoter, which enhances the fixing of the adhesive of the surface of the piping system, like acetic acid, gallic acid, trimellitic acid, trimellitic anhydride, etc.

Also, according to a preferred embodiment of the invention, the adhesive further comprises substances which increase the temperature resistance of the bond. Example of substances which increase said temperature resistance of the bond are phthalic anhydride or maleic anhydride, or mixtures thereof. Said substances improve the resistance to temperature of the joints produced, which allow the use of this type of formula in applications where resistance to temperature has a higher requirement, such as occurs in PVC-C installations, such as those used in heating installations.

Optionally, the adhesive may comprise additionally pigments and/or colorants and/or fragrances and/or fillers, which enhance the properties of the adhesive composition, in term aesthetics, smelling and consistence of the resulting joint.

In the attached drawings it is shown, by way of non-limiting example, a method for bonding a thermoplastic piping system without the use of solvent-based adhesives, and associated adhesive without the use of solvents, according to the invention. Other characteristics and advantages of said method for bonding a thermoplastic piping system without the use of solvent-based adhesives, and associated adhesive without the use of solvents, object of the present invention, will become apparent from the description of a preferred, but not exclusive, embodiment that is illustrated by way of non-limiting example in the accompanying drawings, in which:

### BRIEF DESCRIPTION OF THE DRAWINGS

Figure 1.- Is a view of the structure of the cyanoacrylate monomer, in accordance with the present invention.
Figure 2.- Is a view of the application of the adhesive onto a surface of a first pipe to be fitted inside a second fitting part, in accordance with the present invention.
Figure 3.- Is a view of the resulting joint upon fitting a first pipe inside a second fitting part, after the application of the adhesive, in accordance with the present invention.

### DESCRIPTION OF A PREFERRED EMBODIMENT

In view of the aforementioned figures and, according to the numbering adopted, an illustrative application of the invention can be seen in them, as will be described in detail below, with some alternatives of the method of the present invention.

Just to mention for the sake of illustration, that the most common procedure used for bonding traditional solvent based adhesives for thermoplastic piping systems (1) include:
(a) a cleaner or a primer, usually a solvent or mixture of solvents that can swell the thermoplastic (PVC, for example) like acetone, butanone, cyclohexanone or tetrahydrofuran, is used to clean and degrease the surfaces of the plastic pieces to be bond;
(b) an adhesive is applied onto the joining area of the pipe ends and pipe fitting or pipe connection; and then
(c) the pipe and fitting or pipe connection are inserted together before the so known open time, time interval between the application of the adhesive on the adherents and the assembly of the adhesive bond, has elapsed. Usual open times for commercial adhesives for thermoplastic piping systems range from 2 to 3 minutes;
(d) depending on the supplier's instructions, sometimes in the insertion of the two parts requires a twisting turn (90 degrees), but for others the insertion has to be done without twisting;
(d) after some seconds, usually 30 seconds, the bonded pieces should not be manipulated;
(e) the excess of adhesive is removed with a cloth soaked in cleaner; and
(f) some minutes, usually from 5 to 15 minutes, have to be waited before handling the bonded pieces.

The use of the proposed invention for the bonding of thermoplastic piping systems allows the user more options on the procedure to apply the adhesive and make the bond assuring good performance.

A first application method of the proposed adhesive solution, which is more similar to that indicated for traditional solvent-based adhesives, is as follows:
(a) a cleaner is used to clean and degrease the surfaces. The nature of the cleaner does not need to affect the plastic, so water-based or solvent-based cleaners can be used for that purpose. Alternatively, no cleaner is used, and surfaces are only cleaned by means of a cloth or wipe when necessary;
(b) the adhesive based on cyanoacrylate of this invention is applied onto at least one, preferably on both, of the surfaces to be bonded; and then
(c) the first pipe or fitting part (11) and the second pipe or fitting part (12) are inserted together before the open time lapses. Said open time of the invention adhesive is at least 10 minutes but can be higher depending on the humidity of the environment;
(d) the excess of adhesive is removed with a cloth soaked in cleaner; and
(e) some minutes, usually from 5 to 15 minutes, have to be waited before handling the bonded pieces.

Furthermore, a second application method is:
(a) a cleaner is used to clean and degrease the surfaces. The nature of the cleaner does not need to affect the plastic, so water-based or solvent-based cleaners can be used for that purpose. Alternatively, no cleaner is used, and surfaces are only cleaned by means of a cloth or wipe when necessary;
(b) the adhesive based on cyanoacrylate, or cyanoacrylate adhesive (2) of this invention, is applied onto at least one, preferably on both, of the surfaces to be bonded; and then
(c) the first pipe or fitting part (11) and the second pipe or fitting part (12) are inserted together before the open time lapses. Said open time of the invention adhesive is at least 10 minutes but can be higher depending on the humidity of the environment;
(d) the bonded area is then sprayed with a specific cleaner-activator which also cures / polymerizes the excess of adhesive and reduces the time to be waited before bonded pieces can be handled.

Additionally to the application methods described above, the following procedure is also possible for the proposed adhesive:
(a) a cleaner-activator is used to clean and degrease the surfaces. The cleaner-activator, due to its composition, facilitates the polymerization of the adhesive. The nature of the cleaner-activator does not need to affect the plastic, so water-based or solvent-based cleaner-activator formulas can be used for that purpose;
(b) the adhesive based on cyanoacrylate, or cyanoacrylate adhesive (2) of this invention, is applied onto at least one, preferably on both, of the surfaces to be bonded; and then
(c) the first pipe or fitting part (11) and the second pipe or fitting part (12) are inserted together before the open time lapses. Said open time of the invention adhesive used in these conditions is at least 10 minutes but can be higher depending on the humidity of the environment. Just after joining the pieces, immediate bond strength (fixture) is developed and joint is secured;
d) the bonded area is then sprayed with a specific cleaner-activator which also cures / polymerizes the excess of adhesive. The bonded pieces can then be handled immediately.

Figure 1 illustratively shows a view of the structure of the cyanoacrylate monomer (21).

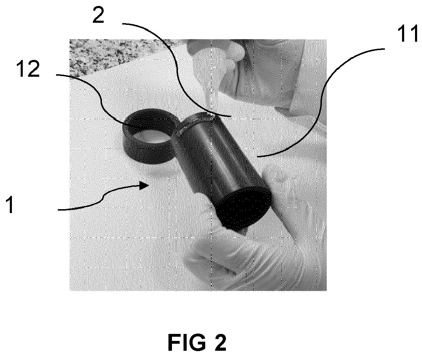

Figure 2 illustratively shows a view of the application of the cyanoacrylate adhesive (2) on a piping system (1), particularly onto a surface of a first pipe or fitting part (11) to be fitted inside a second pipe or fitting part (12).

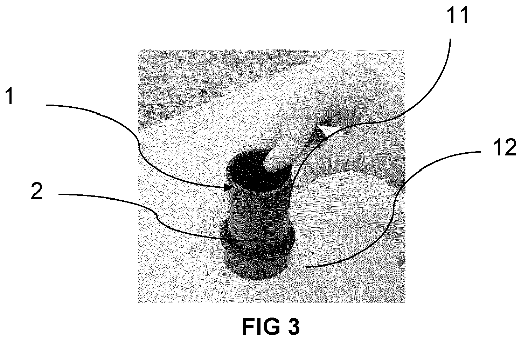

Figure 3 illustratively shows a view of the resulting joint of fitting a first pipe or fitting part (11) to be fitted inside a second pipe or fitting part (12), after the application of the cyanoacrylate adhesive (2).

More particularly, according to figure 2, a method for bonding a thermoplastic piping system (1) without the use of solvent-based adhesives, the piping system (1) comprising at least one first pipe or fitting part (11), and at least one second pipe or fitting part (12), comprises the steps of i) applying a cyanoacrylate adhesive (2) onto at least one surface of the at least one first pipe or fitting part (11), or at least one second pipe or fitting part (12); ii) inserting together the at least one first pipe or fitting part (11), and the at least one second pipe or fitting part (12) before an open time lapses; iii) removing the excess of cyanoacrylate adhesive (2); iv) allowing the adhesive to cure. The thermoplastic being optionally PVC, PVC-C or ABS.

Preferably, according to figure 2, the method for bonding a thermoplastic piping system (1) comprises a previous step of applying a cleaner onto the at least one surface of the pipe and/or the fitting.

Advantageously, according to figure 2, the cleaner is an organic solvent or solvent mixtures or water-based. Most common organic solvents used are acetone, butanone, alcohols and some acetates.

More specifically, according to figure 2, the cleaner also includes active substances that promote polymerization of the cyanoacrylate adhesive (2). Examples of substances that can be used in the cleaner-activator are aromatic amines, polyimines and amine alcohols like N,N-dimethyl-p-toluidine, polyethylenimine or hydroxyethyl morpholines.

Alternatively to what is shown in figure 2, the cleaner is sprayed over the surface to be bonded.

According to another aspect of the invention, according to figure 2, the adhesive for bonding a thermoplastic piping system (1) without the use of solvents, comprises at least one cyanoacrylate monomer (21) that polymerizes in the presence of an initiator, at least one polymerization inhibitor, at least one viscosity thickener, and at least one curing speed adjusting catalyst.

More particularly, according to figure 2, the cyanoacrylate monomer (21) is any of the group of methyl-, ethyl-, butyl-, octyl-, methoxyethyl-cyanoacrylate, or mixtures thereof.

The cyanoacrylate component includes at least one cyanoacrylate monomer that may be selected with a variety of substituents, such as those represented by the following formula H2C=C(CN)-COOR, where R is chosen from C1-18 alkyl, C3-15 cycloalkyl, C2-18 alkoxyalkyl, C2-18 alkenyl, C6-15 aralkyl, C5-15 aryl, C2-15 allyl and haloalkyl groups. More particularly, according to figure 2, the cyanoacrylate monomer (21) is selected from at least one of methyl-, ethyl-, propyl-, butyl-, octyl-, allyl-, methoxyethyl-cyanoacrylate or mixtures thereof. A particular desirable cyanoacrylate monomer is ethyl-2-cyanoacrylate.

Preferably, according to figure 2, the polymerization inhibitor is an anionic inhibitor.

Specifically, according to figure 2, the anionic inhibitor is any of the group of boron trifluoride etherate or boron trifluoride or methanesulfonic acid or sulfur dioxide or sulfur trioxide or methane sulfonic acid or para-toluene sulfonic acid, or mixtures thereof.

In addition, according to figure 2, the polymerization inhibitor is a radical inhibitor.

Optionally, according to figure 2, the radical inhibitor of polymerization is any of the group of hydroquinone or hydroquinone, monomethyl ether or 4-methoxyphenol or butylhydroxytoluene (BHT) or butylhydroxyanisole, isomers (BHA), or mixtures thereof.

Advantageously, according to figure 2, the viscosity thickener is any of the group of poly (methyl methacrylate), methacrylate copolymers, acrylic rubbers, cellulose derivatives, polyvinyl acetate, poly (a-cyanoacrylates), or mixtures thereof.

According to a preferred embodiment of the invention, as per figure 2, the adhesive further comprising at least one polymer and or copolymer dissolved in the cyanoacrylate monomer (21).

In particular, according to figure 2, the polymer or copolymer is a copolymer of vinyl chloride.

Optionally, according to figure 2, the adhesive further comprises at least one plasticizer compatible with the cyanoacrylate monomer (21).

Specifically, according to figure 2, the plasticizer is of acetate type like any of the group of triacetin, phthalates like dioctyl phthalate, trimellitate like trioctyl trimellitate, adipate like dimethyl adipate and benzoates like diethylene glycol dibenzoate.

In a preferred embodiment of the invention, according to figure 2, the curing speed adjusting catalyst is any of the group of a crown ether, or compounds of calixarene, or polyethylene glycols, or mixtures thereof. In particular crown ether, such as 18-crown-6.

Optionally, according to figure 2, the adhesive further comprises a thixotropic agent.

In another aspect of the invention, according to figure 2, the adhesive further comprises at least one adhesion promoter. Substances that act as adhesion promoters for cyanoacrylate adhesives (2) may be acetic acid, gallic acid, trimellitic acid, trimellitic anhydride, or mixtures thereof.

Advantageously, according to figure 2, the adhesive further comprises substances which increase the temperature resistance of the bond, such as phthalic anhydride or maleic anhydride, or mixtures thereof.

And finally, and according to a preferred embodiment of the invention, the adhesive formula adjusted for commercial use is based on the following composition, due to its optimised performance for everyone of its components:
a) Ethyl cyanoacrylate as monomer (40 - 99%, preferred 50-70%);
b) Boron trifluoride etherate complex, methane sulphonic acid and sulphur dioxide as anionic polymerization inhibitors (0.0001 % - 1 %, preferred 0.0002 - 0,006%);
c) Hydroquinone as radical polymerization inhibitor (0.01 to 0.2%, preferred 0.04 - 0,1%);
d) As thickener, a poly(methyl methacrylate) resin has been used (0.01 to 20%, preferred 5-10%) together with - thixotropic agent (0.1 to 10%, preferred 0,2 - 2%, most preferred 0,3-0,6%);
e) A vinyl chloride - vinyl acetate copolymer is used to introduce flexibility and gapfilling properties (2 - 30%, preferred 5 - 10%);
f) Triacetin is the plasticizer used to make the monomer elastic (1 - 40%, preferred 10 - 30%);
g) 18-crown-6 is the catalyst in the selected formula (0.001 - 1%, preferred 0,005 - 0.1%).

An adhesive sample according to the formula indicated before (Sample 1) was tested using test method described in EN ISO 9311-2 and test conditions required in EN 14814 for PVC-U piping systems. The shear strength of the bonded PVC-U test pieces using the adhesive sample prepared according to this invention are shown in the following table, together with the values obtained for a conventional solvent-based adhesive at the same testing conditions and the requirements indicated in EN 14814.

| Shear strength | 1h curing time at 23 °C (MPa) | 24 h curing time at 23 °C (MPa) | 480 h at 23 °C and 96 h at 60 °C |
|---|---|---|---|
| EN 14814 requirement | 0,4 | 1,5 | 7,0 |
| Sample 1 - invention formula adhesive | 5,7 | 11,20 | 17,0 |
| Solvent-based adhesive | 0,72 | 2,20 | 12,7 |

The test results obtained for the invention exceed by far the values for shear strength required by EN 14814 for the different curing times and conditions. Comparing the shear strength values of the invention formula and the conventional solvent-based adhesive demonstrates that the proposed adhesive without the use of solvents has a superior performance in regard to strength of the bond and cure speed.

An adhesive sample according to the formula indicated before (Sample 1) was tested using test method described in EN ISO 9311-3 and test conditions required in EN 14814 for PVC-U piping systems used in cold water applications. The pressure resistance of the bonded PVC-U test pieces using the adhesive sample prepared according to this invention are shown in the following table, showing compliance with the requirements indicated in EN 14814.

| **Material** | **Curing condition s** | **Conditionin g period (h)** | **Pressure conditions (Temperatur e °C)** | **Requirement s for pressure resistance** | **Resul t** |
|---|---|---|---|---|---|
| PVC-U in cold water application | 480 h at 23 °C and 96 h at 60 °C | > 1 | 51,2 bar (20 °C) | ≥ 1000 h no leakage | OK |
| | | | | ≥ 1000 h no | OK |

| | | | | | |
|---|---|---|---|---|---|
| s | | | 20,8 bar (40 °C) | leakage | |

Pressure resistance of the bonds produced by the proposed adhesive conforms the requirements of pressure resistance indicated on EN 14814 for the specified application field.

The details, steps, ranges, as well as the components used in the method for bonding a thermoplastic piping system without the use of solvent-based adhesives, and associated adhesive without the use of solvents, may be conveniently replaced by others that are technically equivalent, and do not depart from the essential nature of the invention or from the scope defined by the claims that are included in the following list.

### List of numerical references:

- 1: piping system
- 11: first pipe or fitting part
- 12: second pipe or fitting part
- 2: cyanoacrylate adhesive
- 21: cyanoacrylate monomer

## Claims

1. Method for bonding a thermoplastic piping system (1) without the use of solvent-based adhesives, the piping system (1) comprising at least one first pipe or fitting part (11), and at least one second pipe or fitting part (12), which comprises the steps of:
i) applying a cyanoacrylate adhesive (2) onto at least one surface of the at least one first pipe or fitting part (11), or at least one second pipe or fitting part (12);
ii) inserting together the at least one first pipe or fitting part (11), and the at least one second pipe or fitting part (12) before an open time lapses;
iii) removing the excess of cyanoacrylate adhesive (2);
iv) allowing the adhesive to cure.

2. Method for bonding a thermoplastic piping system (1) without the use of solvent-based adhesives, according to claim 1, which comprises a previous step of applying a cleaner onto the at least one surface of the pipe and/or the fitting.

3. Method for bonding a thermoplastic piping system (1) without the use of solvent-based adhesives, according to claim 2, wherein the cleaner is an organic solvent or solvent mixtures or water-based.

4. Method for bonding a thermoplastic piping system (1) without the use of solvent-based adhesives, according to claim 2 to 3, wherein the cleaner also includes active substances that promote polymerization of the cyanoacrylate adhesive (2).

5. Method for bonding a thermoplastic piping system (1) without the use of solvents solvent-based adhesives, according to any claim 2 to 4, wherein the cleaner is sprayed over the surface to be bonded.

6. Adhesive for bonding a thermoplastic piping system (1) without the use of solvents, **characterised in that** comprises:
- at least one cyanoacrylate monomer (21) that polymerizes in the presence of an initiator;
- at least one anionic polymerization inhibitor;
- at least one radical polymerization inhibitor,
- at least one viscosity thickener;
- at least one curing speed adjusting catalyst.

7. Adhesive for bonding a thermoplastic piping system (1) without the use of solvents, according to claim 6, wherein the cyanoacrylate monomer (21) is any of the group of methyl-, ethyl-, butyl-, octyl-, methoxyethyl-cyanoacrylate, or mixtures thereof.

8. Adhesive for bonding a thermoplastic piping system (1) without the use of solvents, according to any claim 6 to7, wherein the polymerization inhibitor is an anionic inhibitor.

9. Adhesive for bonding a thermoplastic piping system (1) without the use of solvents, according to claim 8, wherein the anionic inhibitor is any of the group of boron trifluoride etherate or boron trifluoride or methanesulfonic acid or sulfur dioxide or sulfur trioxide or methane sulfonic acid or para-toluene sulfonic acid, or mixtures thereof.

10. Adhesive for bonding a thermoplastic piping system (1) without the use of solvents, according to any claim 6 to 9, wherein the polymerization inhibitor is a radical inhibitor.

11. Adhesive for bonding a thermoplastic piping system (1) without the use of solvents, according to claim 10, wherein the radical inhibitor of polymerization is any of the group of hydroquinone or hydroquinone, monomethyl ether or 4-methoxyphenol or butylhydroxytoluene (BHT) or butylhydroxyanisole, isomers (BHA), or mixtures thereof.

12. Adhesive for bonding a thermoplastic piping system (1) without the use of solvents, according to any claim 6 to 11, wherein the viscosity thickener is any of the group of poly (methyl methacrylate), methacrylate copolymers, acrylic rubbers, cellulose derivatives, polyvinyl acetate, poly (a-cyanoacrylates), or mixtures thereof.

13. Adhesive for bonding a thermoplastic piping system (1) without the use of solvents, according to any claim 6 to 12, further comprising at least one polymer and or copolymer dissolved in the cyanoacrylate monomer (21).

14. Adhesive for bonding a thermoplastic piping system (1) without the use of solvents, according to claim 13, wherein the polymer or copolymer is a copolymer of vinyl chloride.

15. Adhesive for bonding a thermoplastic piping system (1) without the use of solvents, according to any claim 6 to 14, further comprising at least one plasticizer compatible with the cyanoacrylate monomer (21).

16. Adhesive for bonding a thermoplastic piping system (1) without the use of solvents, according to claim 15, wherein the plasticizer is of acetate type like any of the group of triacetin, phthalates like dioctyl phthalate, trimellitate like trioctyl trimellitate, adipate like dimethyl adipate and benzoates like diethylene glycol dibenzoate.

17. Adhesive for bonding a thermoplastic piping system (1) without the use of solvents, according to any claim 6 to 16, wherein the curing speed adjusting catalyst is any of the group of a crown ether, or compounds of calixarene, or polyethylene glycols, or mixtures thereof.

18. Adhesive for bonding a thermoplastic piping system (1) without the use of solvents, according to claim 6 to 17, further comprising a thixotropic agent.

19. Adhesive for bonding a thermoplastic piping system (1) without the use of solvents, according to any claim 6 to 18, further comprising at least one adhesion promoter.

20. Adhesive for bonding a thermoplastic piping system (1) without the use of solvents, according to any claim 6 to 19, further comprising substances which increase the temperature resistance of the bond.
